# EUROPÄISCHE PATENTSCHRIFT

(11) **EP 2 403 716 B1**
(45) Veröffentlichungstag und Bekanntmachung des Hinweises auf die Patenterteilung: **10.06.2015**
(21) Anmeldenummer: 10708966.6
(22) Anmeldetag: 04.03.2010
(51) Int. Cl.: B32B 17/10, B62D 25/06, B60J 7/02

(54) **GANZGLASDACH FÜR EIN KRAFTFAHRZEUG**
TOTAL GLASS ROOF FOR MOTOR VEHICLE
TOIT VITRÉ TOTALE POUR VÉHICULE AUTOMOBILE

(30) Priorität: 05.03.2009 DE 102009011265
(43) Veröffentlichungstag der Anmeldung: 11.01.2012
(73) Patentinhaber: Saint-Gobain Glass France, 92400 Courbevoie (FR); Wagon SAS, 79302 Bressuire Cedex (FR)
(72) Erfinder: LABROT, Michael, 52072 Aachen (DE); SCHMIDT, Lothar, 52074 Aachen (DE); TARDY, Laurent, F-60280 Venette (FR)
(74) Vertreter: Lendvai, Tomas
(86) Internationale Anmeldenummer: PCT/EP2010/052752
(87) Internationale Veröffentlichungsnummer: WO 2010/100223

(56) Entgegenhaltungen:
- WO-A1-02/07967
- WO-A1-2008/068325
- DE-A1-102006 056 501

## Beschreibung

Die Erfindung betrifft ein Ganzglasdach mit einer Lüftungsöffnung für Kraftfahrzeuge.

In seiner einfachsten Ausführung besteht ein Glasdach für Kraftfahrzeuge aus einem in einen Ausschnitt der Dachhaut eingesetzten Dachfenster, das aus einer Schließstellung, in der es bündig mit der übrigen Dachhaut verläuft, in eine abgesenkte und zurückgezogene Stellung verschiebbar oder um eine Achse kippbar gelagert ist und in geöffneter Stellung die Belüftung im Fahrgastraum ermöglicht.

Es sind jedoch auch Dachkonstruktionen für Kraftfahrzeuge bekannt, bei denen die gesamte Dachfläche aus Glas besteht. So ist in der DE 10 2004 029 740 A1 ein Ganzglasdach für ein Kraftfahrzeug beschrieben, das als Panoramadach ausgebildet ist und aus einer großen Glasscheibe besteht, die sich zwischen dem vorderen und dem hinteren Fahrzeugdach-Querträger erstreckt. Bei diesem Ganzglasdach wird die Glasscheibe mit einem Fahrzeugdach-Querträger zu einem Dachelement verbunden, das dann als solches an der Karosserie des Kraftfahrzeugs befestigt wird. Eine Lüftungsöffnung ist bei diesem Glasdach nicht vorgesehen.

Auch in der DE 3 725 053 ist ein die Dachhaut ganzflächig bedeckendes Glaselement beschrieben. Dieses bekannte Glaselement ist in wenigstens zwei Teilbereiche unterteilt, dessen erster Teilbereich das Sichtfeld darstellt und in dessen zweitem Teilbereich Solarzellen angeordnet sind. Dieses Glaselement weist ebenfalls keine Lüftungsöffnung auf.

Es sind auch Dachkonstruktionen für Kraftfahrzeuge bekannt, bei denen ein großer Teil der Dachhaut aus Glas besteht, und bei denen eine verschließbare Lüftungsöffnung vorgesehen ist. Derartige Dachkonstruktionen umfassen zwei oder mehr Glasscheiben, die sich jeweils über die gesamte Breite des Daches erstrecken und in seitlichen Längsschienen gelagert sind. Dabei ist in der Regel wenigstens eine Glasscheibe relativ zu einer zweiten Glasscheibe in Längsrichtung des Fahrzeugs verschiebbar gelagert und legt sich in der Schließstellung dicht an die andere Glasscheibe an. Glasdächer mit diesem grundsätzlichen Aufbau sind beispielsweise in den Dokumenten DE 198 51 366 A1, DE 20 2005 006 879 U1, US 5,261,722, US 4,911,496, DE 102 55 365 A1, DE 197 02 336 A1, EP 0 306 647 B1 beschrieben.

Aus dem Dokument EP 0 857 844 B1, das eine Fensterkonstruktion für eine Fahrzeug-Seitenverglasung beschreibt, ist es bekannt, innerhalb einer feststehenden Glasscheibe eine Öffnung auszubilden, die durch eine sich hin und her bewegende Glasscheibe geöffnet und geschlossen werden kann. Die feststehende Glasscheibe kann auch das Fahrzeugdach bilden. Einzelheiten über die Ausbildung der Glasscheibe, wenn diese als Ganzglasdach dienen soll, sind diesem Dokument nicht zu entnehmen.

Die WO 2008/068325 A1 wird als nächstliegender Stand der Technik angesehen und betrifft eine Konstruktion für ein Ganzglasdach, bei dem ebenfalls innerhalb einer mit dem Dachrahmen zu verbindenden großen Glasscheibe eine Lüftungsöffnung vorgesehen ist, die durch eine zweite Glasscheibe verschlossen und geöffnet werden kann. Dieses Dokument betrifft Einzelheiten bezüglich der mechanischen Konstruktion zum Öffnen und Schließen der Lüftungsöffnung. Die große Glasscheibe kann eine Biegung aufweisen und aus Verbundglas bestehen.

Der Erfindung liegt die Aufgabe zugrunde, bei einem Ganzglasdach aus einer eine Lüftungsöffnung aufweisenden großen Glasscheibe die mit der Karosserie fest zu verbindende große Glasscheibe so auszugestalten, dass sie den erhöhten Anforderungen, die bezüglich ihrer Steifigkeit und mechanischen Festigkeit an ein Fahrzeugdach zu stellen sind, gerecht wird.

Die Aufgabe der Erfindung wird durch Glasdach für ein Kraftfahrzeug umfassend eine erste Glasscheibe gelöst, welche zwischen dem vorderen und dem hinteren Fahrzeugdach-Querträger fest mit der Karosserie verbunden ist und die einen als Lüftungsöffnung dienenden, auf allen Seiten von der Glasscheibe umgebenen Ausschnitt aufweist, in dem eine zweite, den Ausschnitt dicht verschließende und öffnenbare Glasscheibe gelagert ist, wobei die erste Glasscheibe aus einer Verbundglasscheibe aus zwei in ihren Randbereichen jeweils Druckspannungen in Höhe von wenigstens 8 MPa aufweisenden Einzelglasscheiben besteht und die Ecken des Ausschnitts mit einem Radius (R) von wenigstens 80 mm gerundet sind, und dass die Glasscheibe eine dreidimensionale Biegung aufweist. Der Ausdruck "dreidimensionale Biegung" bezieht sich auf eine von einer vollständig planen Scheibe abweichende Geometrie.

Das erfindungsgemäße Glasdach zeichnet sich dadurch aus, dass die erste Glasscheibe aus einer Verbundglasscheibe aus zwei in ihren Randbereichen jeweils Druckspannungen in Höhe von wenigstens 8 MPa aufweisenden Einzelglasscheiben besteht, dass die Ecken der Lüftungsöffnung mit einem Radius von 80 mm gerundet sind.

Ein Ganzglasdach für Kraftfahrzeuge muss wegen der auf die Dachhaut einwirkenden Kräfte, beispielsweise der Windkräfte bei höheren Fahrgeschwindigkeiten und wegen der Torsionsbeanspruchungen, die gelegentlich auf die Karosserie einwirken, eine hohe Formstabilität und Verwindungssteifigkeit aufweisen. Die Verwendung von Einscheiben-Sicherheitsglas, das die nötigen Festigkeitseigenschaften aufweisen würde, verbietet sich aber aus Sicherheitsgründen, da bei einem Bruch der Scheibe die gesamte Dachöffnung frei gegeben wird und außerdem das Glas zusammen mit der mechanischen Konstruktion für das Öffnen und Schließen des Lüftungsfensters in den Fahrgastraum stürzt. Eine normale Verbundglasscheibe mit den Abmessungen eines Kraftfahrzeugdaches, die eine mehr oder weniger große Lüftungsöffnung aufweist, ist aber ein verhältnismäßig labiles Gebilde und daher als solche für die Herstellung eines Ganzglasdaches ebenfalls nicht geeignet. Erst durch die Realisierung der erfindungsgemäßen Merkmale lässt sich ein praxistaugliches Ganzglasdach verwirklichen. Dabei sorgt die Biegung der Glasscheibe für die erforderliche Formstabilität, während die gezielt eingebrachten Druckspannungen in den Randbereichen die nötige Festigkeit und Verwindungssteifigkeit der Verbundglasscheibe bewirken. Die Rundung der Ecken in dem Ausschnitt der Lüftungsöffnung schließlich sorgt dafür, dass in den Ecken keine hohen Spannungsspitzen entstehen, die die Festigkeit des Daches insgesamt herabsetzen würden. In der Regel werden die bei Verwindung und Windkräften auftretenden Zugspannungen durch einen größeren Biegeradius reduziert.

Das erfindungsgemäße Glasdach kann zusammen mit der nötigen Mechanik für das Öffnen und Schließen des Lüftungsfensters als komplettes Modul vorbereitet und verhältnismäßig schnell in gleicher Weise wie die übrigen Glasscheiben in eine entsprechend ausgebildete Karosserieöffnung eingesetzt werden, indem es beispielsweise mit Hilfe eines geeigneten Kleberstrangs mit dem Dachrahmen verklebt wird.

Für das Ausschneiden des Ausschnitts lassen sich die bei der Herstellung von Autoglasscheiben üblichen Schneidverfahren nicht ohne weiteres anwenden. In diesem Fall empfiehlt es sich, den Schneidvorgang mit Hilfe des Hochdruck-Wasserstrahl-Schneidverfahrens durchzuführen, das als solches auch zum Schneiden von Glasscheiben bekannt ist (siehe zum Beispiel DE 4 033 949 C1). Stattdessen kann für diesen Zweck auch ein Laserstrahl-Schneidverfahren zum Einsatz kommen.

Es zeigen
- Fig. 1 ein erfindungsgemäßes Ganzglasdach in perspektivischer Darstellung und
- Fig. 2 eine Variation des erfindungsgemäßen Ganzglasdachs im Querschnitt.

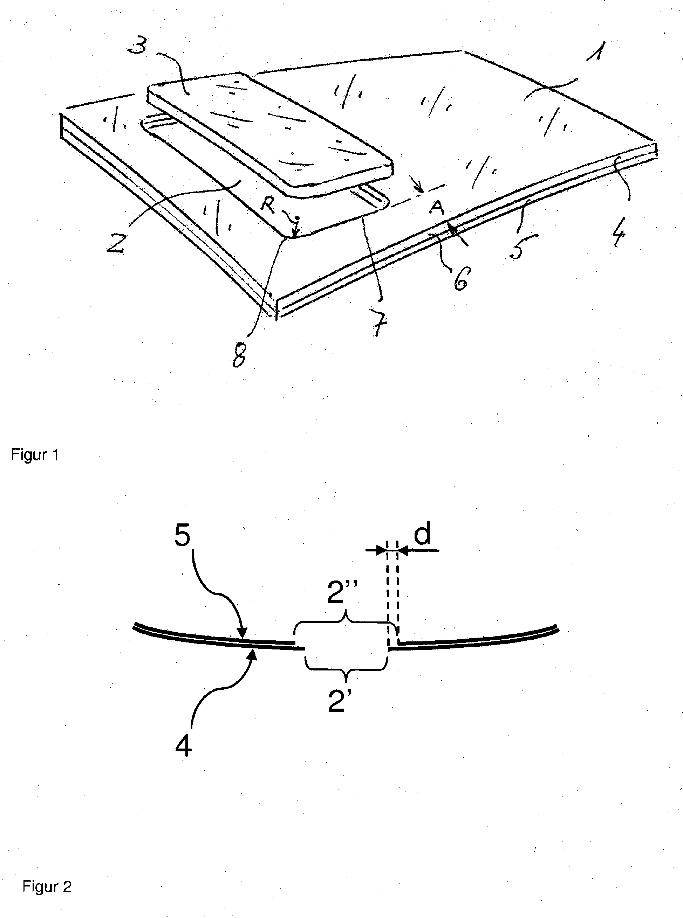

Wie Fig. 1 zeigt, besteht das Glasdach aus einer großen Glasscheibe 1, die zwischen dem vorderen Querträger und dem hinteren Querträger sowie den seitlichen Längsträgern des Fahrzeugdaches die Dachhaut des Fahrzeugs bildet. Die Glasscheibe 1 weist im vorderen Bereich einen verhältnismäßig großen Ausschnitt 2 auf, der die Lüftungsöffnung im Dach bildet. Dieser Ausschnitt 2 kann durch die Glasscheibe 3 geschlossen werden. Die Glasscheibe 3 und/oder der Ausschnitt 2 können mit geeigneten Rahmen versehen sein, die die Öffnung der Glasscheibe 3 ermöglichen und im geschlossenen Zustand die Abdichtung der Glasscheibe 3 im Ausschnitt 2 sicherstellen.

Fig. 2 zeigt eine Variation des Glasverbunds. Der Ausschnitt (2") der innenliegenden Glasscheibe (5) ist größer als der Ausschnitt (2') der außenliegenden Glasscheibe (4). Der Abstand d zwischen der Ausschnittkante der innenliegenden Glasscheibe (5) und der Ausschnittkante der außenliegenden Glasscheibe (4) beträgt umlaufend etwa 0 bis 10 mm. Die Randdruckspannungen im Bereich des Ausschnitts der innenliegenden Glasscheibe (5) und der außenliegenden Glasscheibe (4) sind erhöht.

Die Glasscheibe 1 ist eine Verbundglasscheibe. Sie besteht aus den beiden Silikatglasscheiben 4 und 5, die über eine beispielsweise 0,76 mm dicke Zwischenschicht 6 aus Polyvinylbutyral miteinander verbunden sind. Die Glasscheiben 4 und 5 haben jeweils eine Dicke von 1,5 bis 4 mm, und vorzugsweise von etwa 2,6 mm. Zur Erhöhung ihrer Stabilität und Steifigkeit ist die Glasscheibe 1 sowohl in Längsrichtung als auch in Querrichtung gebogen. Ferner weisen die beiden Glasscheiben 4 und 5 zur weiteren Erhöhung ihrer Festigkeit in ihren Oberflächen- und Randbereichen Druckvorspannungen auf, die durch beschleunigte Abkühlung nach dem Biegeprozess erzeugt werden. Die Abkühlungsbedingungen sind dabei so zu wählen, dass insbesondere in den Randbereichen, in denen die größten Beanspruchungen auftreten, die Druckvorspannungen wenigstens 8 MPa betragen. Diese Randdruckspannungen können mit der Methode von Sénarmont- oder Friedel gemessen werden. Ein geeignetes Messgerät ist beispielsweise der "Edge stress Master" der Fa. SHARPLESS STRESS ENGINEERS LTD.

Bevor die beiden Glasscheiben 4 und 5, die später die Verbundglasscheibe 1 bilden, als Scheibenpaar gebogen werden, wird mit Hilfe einer Hochdruck-WasserstrahlSchneidmaschine in den beiden Glasscheiben 4 und 5 die Lüftungsöffnung 2 ausgeschnitten, und die Schnittkanten werden in bekannter Weise geschliffen. Dabei sollte darauf geachtet werden, dass die Abweichungen von den vorgegebenen Sollmaßen nicht größer als +/-1 mm sind.

Die Lüftungsöffnung 2 hat in der Regel eine rechteckige Form, sie kann aber auch je nach der Gestaltung des Fahrzeugdachs in jeder Form wie trapezförmig, kreisförmig oder ovalförmig ausgebildet sein. In jedem Fall ist darauf zu achten, dass der kleinste Abstand A an der schmalsten Stelle zwischen der Außenkante der Glasscheibe 1 und der Innenkante 7 der Lüftungsöffnung wenigstens 50 mm, und vorzugsweise mehr als 150 mm beträgt.

Ferner hat es sich gezeigt, dass die Ausbildung der Eckbereiche 8 der Lüftungsöffnung 2 von wesentlicher Bedeutung für die Festigkeit der Glasscheibe 1 ist. Es ist daher wichtig, dass die Lüftungsöffnung 2 keine ausgesprochenen Ecken ausweisen darf, sondern dass die Ecken 8 eine Rundung aufweisen müssen, deren Radius R wenigstens 15 mm vorzugsweise aber wenigstens 60mm beträgt. Eine auch hohen Beanspruchungen genügende Festigkeit ist auf jeden Fall gegeben, wenn der Radius R in den Ecken 8 der Lüftungsöffnung 80 mm oder mehr beträgt.

Bei der die Lüftungsöffnung abdeckenden Glasscheibe 3 kann es sich um eine plane Glasscheibe handeln, doch ist sie vorzugsweise dem Verlauf der Dachfläche entsprechend gebogen. Sie kann aus einer normalen Verbundglasscheibe bestehen. Vorzugsweise besteht sie aber ebenfalls aus einem Verbundglas aus wenigstens im Randbereich unter Druck-Vorspannungen stehenden Einzelglasscheiben und weist den gleichen Aufbau auf wie die Glasscheibe 1. Statt aus Verbundglas kann sie aber auch aus thermisch vorgespanntem Einscheibensicherheitsglas oder aus einem transparenten schlagfesten Polymer wie beispielsweise Polykarbonat bestehen. Auch bei der Glasscheibe 3 ist auf hohe Maßgenauigkeit zu achten, damit sie sich mit einem möglichst gleichbleibenden geringen Spaltmaß in die Lüftungsöffnung einpasst.

Die Glasscheibe 1 ist vorzugsweise als Wärmeschutzscheibe ausgebildet, indem entweder eine oder beide Einzelscheiben der Verbundglasscheibe aus einem eingefärbten Wärmeschutzglas bestehen und/oder mit einer Wärmestrahlen reflektierenden Beschichtung versehen sind. Selbstverständlich ist es zweckmäßig, in diesem Fall auch die innere Glasscheibe 3 entsprechend auszubilden, um der Dachfläche ein einheitliches Aussehen zu geben.

Die Glasscheibe 1 wird bei der Montage in der Fahrzeugkarosserie mit dem Dachrahmen verklebt. Um die Kleberaupe zu verdecken, ist die Glasscheibe 1 vorzugsweise umlaufend mit einer beispielsweise schwarzen Einbrennfarbe versehen, wie das beim Einkleben von Autoglasscheiben üblich ist. Außerdem kann die Glasscheibe 1 auf der Klebefläche mit einer Primerschicht oder bereits mit einem Polymerprofil versehen sein, das nach dem Einbau der Glasscheibe den Spalt zwischen dem Rand der Glasscheibe und dem Dachrahmen abdeckt.

Bei großen Abmessungen kann die Glasscheibe 1 mit geeigneten Versteifungselementen versehen sein, die auf der Unterseite der Glasscheibe mit dieser verklebt werden. Schließlich ist es zweckmäßig, vor dem Einbau in die Fahrzeug-Karosserie die Glasscheibe 1 auch mit den Dichtungen und mit der Mechanik zu versehen, die für die Lagerung und für den Öffnungs- und Schließvorgang der Glasscheibe 3 erforderlich sind. Auf diese Weise kann insbesondere ein vollständiges Glasdachmodul hergestellt werden, das dann als solches nur noch in den Dachrahmen eingesetzt zu werden braucht.

## Patentansprüche

1. Glasdach für ein Kraftfahrzeug aus einer im wesentlichen die gesamte Dachfläche zwischen dem vorderen und dem hinteren Fahrzeugdach-Querträger bildenden und fest mit der Karosserie verbindbaren ersten Glasscheibe (1), die einen als Lüftungsöffnung dienenden, auf allen Seiten von der Glasscheibe umgebenen Ausschnitt (2) aufweist, in dem eine zweite, den Ausschnitt dicht verschließende und öffenbare Glasscheibe (3) gelagert ist, wobei die Glasscheibe (1) eine eidimensionale Biegung aufweist, **dadurch gekennzeichnet, dass** die erste Glasscheibe (1) aus einer Verbundglasscheibe aus zwei in ihren Randbereichen jeweils Druckspannungen in Höhe von wenigstens 8 MPa aufweisenden Einzelglasscheiben (4,5) besteht, drund der Radius (R) in den Ecken (8) der Lüftungsöffnung 80 mm oder mehr beträgt.

2. Glasdach nach Anspruch 1, **dadurch gekennzeichnet, dass** der Abstand (A) zwischen der Außenkante der Glasscheibe (1) und der Innenkante (7) der Lüftungsöffnung (2) wenigstens 50 mm beträgt.

3. Glasdach nach Anspruch 1 oder 2, **dadurch gekennzeichnet, dass** der Ausschnitt (2") der innenliegenden Glasscheibe (5) umlaufend etwa 0,1 mm bis 10 mm größer ist als der Ausschnitt (2') der außenliegenden Glasscheibe (4).

4. Glasdach nach einem der Ansprüche 1 bis 3, **dadurch gekennzeichnet, dass** die den Ausschnitt (2) verschließende Glasscheibe (3) aus Einscheibensicherheitsglas besteht.

5. Glasdach nach einem der Ansprüche 1 bis 4, **dadurch gekennzeichnet, dass** die den Ausschnitt (2) verschließende Glasscheibe (3) aus Verbundsicherheitsglas besteht.

6. Glasdach nach einem der Ansprüche 1 bis 5, **dadurch gekennzeichnet, dass** die den Ausschnitt (2) verschließende Glasscheibe (3) aus einem schlagfesten Polymer besteht.

7. Glasdach nach einem der Ansprüche 1 bis 6, **dadurch gekennzeichnet, dass** die den Ausschnitt (2) verschließende Glasscheibe (3) eine dreidimensionale Biegung aufweist.

8. Glasdach nach einem der Ansprüche 1 bis 7, **dadurch gekennzeichnet, dass** die Glasscheibe (1) am Rand mit einer lichtundurchlässigen Einbrennfarbe versehen ist.

9. Glasdach nach einem der Ansprüche 1 bis 8, **dadurch gekennzeichnet, dass** die den Ausschnitt (2) aufweisende Glasscheibe (1) auf ihrer Unterseite mit Versteifungselementen versehen ist.

10. Glasdach nach einem der Ansprüche 1 bis 9, **dadurch gekennzeichnet, dass** die Versteifungselemente die Konstruktion für die Halterung und Betätigung der öffnenbaren Glasscheibe (3) bilden.

## Claims

1. Glass roof for a motor vehicle comprising a first glass pane (1), forming substantially the entire roof area between the front and the rear vehicle roof cross members and rigidly connectable to the vehicle body, that has a cutout (2) used as a ventilation opening surrounded on all sides by the glass pane, in which cutout a second, openable glass pane (3) tightly sealing the cutout is mounted, wherein the first glass pane (1) comprises a laminated glass pane made of two individual glass panes (4,5) each having compressive stresses in their edge areas of at least 8 MPa, the glass pane (1) has a three-dimensional bend, and the radius (R) in the corners (8) of the ventilation opening is 80 mm or more.

2. Glass roof according to claim 1, wherein the distance (A) between the outer edge of the glass pane (1) and the inner edge (7) of the ventilation opening (2) is at least 50 mm.

3. Glass roof according to claim 1 or 2, wherein the cutout (2") of the inside glass pane (5) is peripherally roughly 0.1 mm to 10 mm larger than the cutout (2') of the outside glass pane (4).

4. Glass roof according to one of claims 1 through 3, wherein the glass pane (3) sealing the cutout (2) is made of single-pane safety glass.

5. Glass roof according to one of claims 1 through 4, wherein the glass pane (3) sealing the cutout (2) is made of laminated safety glass.

6. Glass roof according to one of claims 1 through 5, wherein the glass pane (3) sealing the cutout (2) is made of an impact-resistant polymer.

7. Glass roof according to one of claims 1 through 6, wherein the glass pane (3) sealing the cutout (2) has a three-dimensional bend.

8. Glass roof according to one of claims 1 through 7, wherein the glass pane (1) is provided on the edge with an opaque baking ink.

9. Glass roof according to one of claims 1 through 8, wherein the glass pane (1) with the cutout (2) is provided on its underside with stiffening elements.

10. Glass roof according to one of claims 1 through 9, wherein the stiffening elements form the mechanism for the mounting and operation of the openable glass pane (3).

## Revendications

1. Toit en verre pour un véhicule automobile, composé d'un premier panneau de verre (1), qui forme sensiblement toute la surface du toit comprise entre les poutres transversales avant et arrière du toit du véhicule et qui peut être assemblé rigidement à la carrosserie, lequel panneau présente une fenêtre (2) servant d'ouverture d'aération, entourée de tous côtés par le panneau de verre, dans laquelle est disposé un second panneau de verre (3) qui ferme hermétiquement la fenêtre et qui peut s'ouvrir, le panneau de verre (1) présentant une courbure tridimensionnelle, **caractérisé par le fait que** le premier panneau de verre (1) est constitué par un panneau de verre composite formé de deux panneaux de verre individuels (4, 5) dont chacun est exposé dans ses régions marginales à des contraintes de pression d'un niveau d'au moins 8 MPa, et **par le fait que** le rayon (R) d'arrondi dans les angles (8) de l'ouverture d'aération est de 80 mm ou plus.

2. Toit en verre selon la revendication 1, **caractérisé par le fait que** la distance (A) entre le bord extérieur du panneau de verre (1) et le bord intérieur (7) de l'ouverture d'aération (2) est d'au moins 50 mm.

3. Toit en verre selon l'une des revendications 1 ou 2, **caractérisé par le fait que** la fenêtre (2'') du panneau de verre intérieur est d'environ 0,1 mm à 10 mm plus grande que la fenêtre (2') du panneau de verre extérieur (4).

4. Toit en verre selon l'une des revendications 1 à 3, **caractérisé par le fait que** le panneau de verre (3) qui ferme la fenêtre (2) est fait de verre de sécurité trempé simple.

5. Toit en verre selon l'une des revendications 1 à 4, **caractérisé par le fait que** le panneau de verre (3) qui ferme la fenêtre (2) est fait de verre de sécurité feuilleté.

6. Toit en verre selon l'une des revendications 1 à 5, **caractérisé par le fait que** le panneau de verre (3) qui ferme la fenêtre (2) est fait d'un polymère résistant au choc.

7. Toit en verre selon l'une des revendications 1 à 6, **caractérisé par le fait que** le panneau de verre (3) qui ferme la fenêtre (2) présente une courbure tridimensionnelle.

8. Toit en verre selon l'une des revendications 1 à 7, **caractérisé par le fait que** le panneau de verre (1) est muni le long de son bord d'une coloration opaque cuite au four.

9. Toit en verre selon l'une des revendications 1 à 8, **caractérisé par le fait que** le panneau de verre (1) qui ferme la fenêtre (2) est muni d'éléments de raidissement sur sa face inférieure.

10. Toit en verre selon l'une des revendications 1 à 9, **caractérisé par le fait que** les éléments de raidissement forment la construction servant à fixer et à actionner le panneau de verre ouvrant (3).
